(19) **Europäisches Patentamt**
**European Patent Office**
**Office européen des brevets**

(11) **EP 3 435 520 A1**

(12) **EUROPEAN PATENT APPLICATION**
published in accordance with Art. 153(4) EPC

(43) Date of publication:
**30.01.2019 Bulletin 2019/05**

(21) Application number: **16895363.6**

(22) Date of filing: **23.03.2016**

(51) Int Cl.:
***H02K 1/02*** (2006.01)

(86) International application number:
**PCT/JP2016/059159**

(87) International publication number:
**WO 2017/163327 (28.09.2017 Gazette 2017/39)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**MA MD**

(71) Applicant: **Nippon Steel & Sumitomo Metal
Corporation
Tokyo 100-8071 (JP)**

(72) Inventor: **KAWAMATA Ryutaro
Tokyo 100-8071 (JP)**

(74) Representative: **Vossius & Partner
Patentanwälte Rechtsanwälte mbB
Siebertstrasse 3
81675 München (DE)**

(54) **NON-ORIENTED ELECTRICAL STEEL SHEET MANUFACTURING METHOD AND CLAW POLE MOTOR**

(57) There is provided a non-oriented electrical steel sheet for a stator core of a claw pole motor, the non-oriented electrical steel sheet is a strip-shaped steel sheet in which magnetic flux density in a direction forming 45° with respect to a rolling direction is higher than magnetic flux density in the rolling direction and magnetic flux density in a transverse direction that is a direction forming 90° with respect to the rolling direction.

FIG. 1

EP 3 435 520 A1

**Description**

[Technical Field of the Invention]

The present invention relates to a non-oriented electrical steel sheet which is used as a core material of a claw pole motor, a manufacturing method therefor, and a claw pole motor which uses the non-oriented electrical steel sheet.

[Related Art]

Claw pole motors have come to be noticed since the 1970's as accuracy in positional alignment has improved due to the development of a sheet metal technology. Particularly, claw pole motors have been used as stepping motors, or alternators for automobiles. However, recently, application thereof to generators, which also serve as alternators, for generating regenerative electric power is expanding. Moreover, increasing use thereof as drive motors for EV/HEV is expected.

As stator cores for claw pole motors, stator cores each formed by punching a non-oriented electrical steel sheet into a disk shape with claws, bending the claws, and cylinder drawing of a core back have been used for a long time. In recent years, stator cores each formed by punching a non-oriented electrical steel sheet into a strip-shaped blank with a plurality of claws (claw pole) and causing the punched blank to be subjected to sheet metal working to have a cylindrical shape have been used. Since motor cores for claw pole motors can be easily made through sheet metal working, claw pole motors are appreciated in motors for use having regard for cost reduction.

Incidentally, if a strip-shaped blank is punched by using a general non-oriented electrical steel sheet and the blank is worked into a stator core, there is a problem that a flow of a magnetic flux is not smooth in a claw pole of the stator core and a core back. That is, since such a stator core is used by causing an integrally punched strip-shaped member into a cylindrical shape, non-oriented magnetic properties of a material within a surface are meaningless, and it is important to have favorable magnetic properties in only two directions which are orientations of the claw pole and the core back at an angle of 90°. However, at present, a process difficult to be carried out is required for bidirectional electrical steel sheets having excellent magnetic properties in directions of 0° and 90° with respect to a rolling direction, so that they have not yet been put to practical use industrially.

In addition, since a strip-shaped blank after punching is subjected to sheet metal working to be a core, there is a problem that the core of a claw pole motor has low efficiency due to the influence of deterioration of magnetic properties caused by strain during sheet metal working, compared to ordinary motors obtained by stacking steel sheets obtained through punching, in a case of making a core having an output and torque equivalent thereto. In order to solve this problem, there has been a demand for development of non-oriented electrical steel sheets or hot rolled steel sheets having magnetic properties of being less sensitive to stress in sheet metal working than the non-oriented electrical steel sheets or the hot rolled steel sheets in the related art.

Patent Document 1 discloses a bidirectional electrical steel sheet which is used as a split core. However, since the bidirectional electrical steel sheet requires cross rolling in a manufacturing process, there is a problem of low productivity and high cost so that it is difficult to cope with cost reduction which is severely required for claw pole motors.

Patent Document 2 discloses a claw pole motor using a core which is formed by compressing magnetic powder. However, in this case, since magnetic powder is used as a core, the core requires DC magnetization characteristics such that magnetic flux density becomes 1.7 tesla or higher in a case where a strong magnetic field such as 10,000 A/m is applied, so that operational magnetic flux density becomes low compared to the non-oriented electrical steel sheet and torque of the motor decreases. In order to improve the torque, the number of windings of a copper wire needs to be increased, thereby resulting in a problem that the motor itself is increased in size and the cost of the copper wire increases in accordance with an increase in the quantity of the copper wire to be used. Furthermore, since the core is a split core, it takes time and labor to assemble the core, and the cost rises. Therefore, it is difficult to satisfy the demand of low cost and miniaturization required for the claw pole motor.

Patent Document 3 discloses a stepping motor in which two or more sensor claw pole-type yoke units having the same structure as that of an excitation claw pole-type yoke unit are disposed side by side in an axial direction of a rotary shaft while being adjacent to the excitation claw pole-type yoke unit. However, in addition to the excitation claw pole-type yoke unit, this motor requires the rotary sensor claw pole-type yoke units, and there is a need to wind a copper wire inside the unit. Consequently, the motor is increased in size and weight, so that the manufacturing cost increases.

Patent Document 4 discloses a stepping motor in which a positional alignment projection is provided in a coil bobbin to be fitted into a positional alignment hole in a stator core such that positional misalignment is unlikely to occur between the stator core and the coil bobbin when the stator core having a claw pole-type structure is assembled with the coil bobbin. However, it is a technology related to a method of assembling a general claw pole motor, so that improvement of motor characteristics, high efficiency, and miniaturization are not realized.

Patent Document 5 discloses a single phase claw pole-type motor in which a side surface of a claw pole is parallel to an axial direction and productivity can be improved. However, high efficiency, high torque, miniaturization, and the like of the claw pole motor are not achieved. In addition, a stator having the claw pole is integrally punched, and there is a problem that a texture of a non-oriented electrical steel sheet cannot be utilized.

Patent Document 6 discloses a claw pole-type motor having a three-split core structure which includes a core having an axially downward claw pole, a core having an axially upward claw pole, and a core vertically bisecting a winding wire. In the structure, the cores having the claw pole vertically sandwich the core bisecting the winding wire. This motor aims to insure a cross-sectional area for a magnetic flow path from teeth to the claw poles, on the premise that an immaculate magnetic body, an immaculate sintered material, or an immaculate pressed powder material is used in order to increase the cross-sectional area. However, it is not postulated that a non-oriented electrical steel sheet is used. In addition, since the cross-sectional area of the core is increased in order to ensure the magnetic flux of the core, and there is a problem that if a non-oriented electrical steel sheet is used, an eddy current increases, and efficiency of the claw pole motor becomes drastically low.

As a method of manufacturing a non-oriented cold-rolled electrical steel sheet having excellent magnetic properties in two directions intersecting each other at an angle of 45° with respect to a rolling direction, Patent Document 7 discloses a hot finish rolling method in which a slab reheating temperature ranges from 1,150°C to 700°C, a hot finish rolling start temperature ranges from 650°C to 850°C, and a hot finish rolling temperature ranges from 550°C to 800°C.

However, in a case of realizing the hot finish rolling start temperature and the hot finish rolling temperature as disclosed in Patent Document 7, there is a problem that rolling reaction applied to a hot rolling roll of a hot finish rolling mill increases, wear thereof is quickened, the life span is shortened, and the life span of bearings of the roll is also shortened due to the increased rolling reaction.

Moreover, there is another problem that if the slab reheating temperature is lowered in rough rolling prior to hot finish rolling, rolling reaction of a slab manufactured through ordinary continuous casting becomes excessive regardless of the ability of a roughing mill, and it is difficult to roll the slab such that a sheet bar having a predetermined sheet thickness is obtained.

As a method of manufacturing a non-oriented hot-rolled electrical steel sheet having excellent magnetic properties in two directions intersecting each other at an angle of 45° with respect to a rolling direction, Patent Document 8 discloses a hot finish rolling method for a thin slab having a sheet thickness ranging from 20 mm to 100 mm, in which a hot finish rolling start temperature ranges from 650°C to 850°C and a hot finish rolling temperature ranges from 550°C to 800°C.

However, in a case of realizing the hot finish rolling start temperature and the hot finish rolling temperature as disclosed in Patent Document 8, there is a problem that rolling reaction applied to a hot rolling roll of a hot finish rolling mill increases, wear thereof is quickened, the life span is shortened, and the life span of bearings of the roll is also shortened due to the increased rolling reaction.

[Prior Art Document]

[Patent Document]

[Patent Document 1] Japanese Unexamined Patent Application, First Publication No. H11-355983
[Patent Document 2] Japanese Unexamined Patent Application, First Publication No. 2008-72854
[Patent Document 3] Japanese Unexamined Patent Application, First Publication No. 2001-161054
[Patent Document 4] Japanese Unexamined Patent Application, First Publication No. 2003-189584
[Patent Document 5] Japanese Unexamined Patent Application, First Publication No. 2013-201811
[Patent Document 6] Japanese Unexamined Patent Application, First Publication No. 2005-117744
[Patent Document 7] Japanese Unexamined Patent Application, First Publication No. 2011-111658
[Patent Document 8] Japanese Unexamined Patent Application, First Publication No. 2012-67330

[Disclosure of the Invention]

[Problems to be Solved by the Invention]

In consideration of a flow of a magnetic field in a core of a claw pole motor, it has been obvious to those skilled in the art that a core having favorable magnetic properties can be obtained by using an electrical steel sheet (bidirectional electrical steel sheet) having excellent magnetic properties in two directions orthogonal to each other. However, as described above, since a strip-shaped blank punched out from an electrical steel sheet is made into a core through sheet metal working in a process of manufacturing a claw pole motor, deterioration of magnetic properties occurs due to strain generated in the core through sheet metal working. As a result, there is a problem that compared to an ordinary motor obtained by stacking the steel sheets which are obtained by punching under a condition of the same output and the same torque, the maximum efficiency of the claw pole motor produced by using the bidirectional electrical steel sheet is low.

In this specification, an ordinary motor indicates an integrally punched induction motor, an induction motor using a split core in a stator, an integrally punched synchronous motor, a synchronous motor using a split core in a stator, or the like.

In regard to the problems described above, the inventors of this application have found that if a non-oriented electrical steel sheet having excellent magnetic properties in a direction forming 45° with respect to a rolling direction is used as a material of a stator core of a claw pole motor, the maximum efficiency becomes higher than a case of using the same non-oriented electrical steel sheet and producing an ordinary motor which has a core back and teeth and is provided with a winding wire around the teeth. In other words, even if a non-oriented electrical steel sheet having the above-described features is used for a motor other than the claw pole motor, an effect of amelioration as that in the case of being applied to the claw pole motor is not manifested.

Meanwhile, as disclosed in Patent Documents 7 and 8, as a method of manufacturing a non-oriented electrical steel sheet having excellent magnetic properties in the direction forming 45° with respect to the rolling direction, a technology of hot finish rolling at a low temperature has been known. However, there has been an equipment problem for realizing the technologies with roughing mills and hot finish rolling mills in existence.

The present invention has been made in consideration of the foregoing circumstances, and an object thereof is to provide a non-oriented electrical steel sheet as a material of a stator core of a low cost claw pole motor having excellent magnetic properties, high efficiency, and a small size; a manufacturing method therefor; and a claw pole motor made of the non-oriented electrical steel sheet, while solving the equipment problem of the technologies in the related art.

[Means for Solving the Problem]

As described above, the inventors of this application have found that if a non-oriented electrical steel sheet having excellent magnetic properties in a direction forming 45° with respect to a rolling direction is used as a material of a stator core of a claw pole motor, the maximum efficiency becomes higher than a case of using the same non-oriented electrical steel sheet and producing an ordinary motor which has a core back and teeth and is provided with a winding wire around the teeth.

Although the technical reason for being able to achieve such an effect is not obvious, the following reasons are presumed. That is, it is assumed that a texture or a crystal structure is ameliorated in the non-oriented electrical steel sheet having excellent magnetic properties in the direction forming 45° with respect to the rolling direction. Therefore, it is assumed that when a strip-shaped blank punched out from the non-oriented electrical steel sheet is subjected to sheet metal working and a core is formed, the amount of residual strain introduced to the core is reduced, and a flow of a magnetic flux inside the core of the claw pole motor is drastically ameliorated as a result thereof.

As a method of manufacturing a non-oriented electrical steel sheet having such features, a technology for hot finish rolling at a low temperature as disclosed in Patent Documents 7 and 8 (technology in which a temperature condition for hot finish rolling is set to be lower than a generally known temperature) is known. However, there is an equipment problem for realizing the technologies with roughing mills and hot finish rolling mills in existence (life shortening of a hot rolling roll and bearings), so that it is not easy to realize the technologies.

As a result of further investigation, the inventors of this application have found that if a rolling speed of hot finish rolling is set low and controlled cooling is accurately performed while a slab heating temperature and a rough rolling temperature are maintained at a general temperature, it is possible to manufacture a non-oriented electrical steel sheet having magnetic properties equivalent to or higher than those of the technologies in the related art while the equipment problem of the technologies in the related art is solved, and the inventors have completed the present invention. In description below, a manufacturing method in the related art indicates a method of manufacturing a non-oriented electrical steel sheet through low-temperature hot finish rolling as disclosed in Patent Documents 7 and 8.

The inventors of this application have found that, according to the manufacturing method of the present invention, compared to the manufacturing method in the related art, it is possible to obtain a non-oriented electrical steel sheet having a very excellent magnetic properties, in which a range of high magnetic flux density centering on the direction forming 45° with respect to the rolling direction is distributed at a wide angle around a sheet surface normal line and its absolute value is also high.

Although the technical reason for being able to manufacture a non-oriented electrical steel sheet having magnetic properties more excellent than those of the manufacturing method in the related art by lowering the rolling speed of hot finish rolling is not obvious, the following reasons are presumed. That is, although a sheet bar conveyed from a roughing mill to a hot finish rolling mill is rolled at a temperature far higher than that in cold rolling while receiving a heat release from the hot rolling roll of the hot finish rolling mill, since the rolling speed is lowered, heat generation in working itself is suppressed. As a result, there seems to be a possibility that a non-oriented electrical steel sheet having a texture or a crystal structure different from those in a non-oriented electrical steel sheet manufactured by the manufacturing method in the related art.

In addition, the inventors of this application have simultaneously found that in a case of the rolling speed in the manufacturing method in the related art, the effect of excellent magnetic properties in the direction of 45° which can be achieved by the manufacturing method according to the present invention is impaired. Although the technical reason thereof is also not obvious, it is presumed as the reason that since a strain rate rises as the rolling speed is increased, recrystallization proceeds more than necessary during finish rolling, so that a texture or a crystal structure having excellent magnetic properties cannot be formed.

The gist of the present invention completed based on an investigation result as described above is as follows.

(1) According to an aspect of the present invention, there is provided a non-oriented electrical steel sheet for a stator core of a claw pole motor, the non-oriented electrical steel sheet is a strip-shaped steel sheet in which magnetic flux density in a direction forming 45° with respect to a rolling direction is higher than magnetic flux density in the rolling direction and magnetic flux density in a transverse direction that is a direction forming 90° with respect to the rolling direction.

(2) In the non-oriented electrical steel sheet according to (1), when a first direction represents a direction inclined at an angle of 45° counterclockwise around a sheet surface normal line with respect to the rolling direction; a second direction represents a direction inclined at an angle of 135° counterclockwise around a sheet surface normal line with respect to the rolling direction; a third direction represents a direction inclined at an angle of 45° clockwise around the sheet surface normal line with respect to the rolling direction; a fourth direction represents a direction inclined at an angle of 135° clockwise around the sheet surface normal line with respect to the rolling direction; B50 (45-ave.) represents an average value of magnetic flux density in the first direction, magnetic flux density in the second direction, magnetic flux density in the third direction, and magnetic flux density in the fourth direction with a magnetizing force of 5,000 A/m by a unit T; and B50 (L+C) represents an average value of the magnetic flux density in the rolling direction and the magnetic flux density in the transverse direction with a magnetizing force of 5,000 A/m by the unit T, the following Expression (1) may be established.

$$B50 \ (L+C)+0.020<B50 \ (45\text{-ave.}) \ ... \ (1)$$

(3) In the non-oriented electrical steel sheet according to (2), the magnetic flux density in the first direction may be the highest among directions in which an angle with respect to the rolling direction is included within a range from 0° to 90° counterclockwise around the sheet surface normal line; the magnetic flux density in the second direction may be the highest among directions in which an angle with respect to the rolling direction is included within a range from 90° to 180° counterclockwise around the sheet surface normal line; the magnetic flux density in the third direction may be the highest among directions in which an angle with respect to the rolling direction is included within a range from 0° to 90° clockwise around the sheet surface normal line; the magnetic flux density in the fourth direction may be the highest among directions in which an angle with respect to the rolling direction is included within a range from 90° to 180° clockwise around the sheet surface normal line, when B45 max represents the magnetic flux density in the first direction, a condition that magnetic flux density in a direction in which an angle with respect to the first direction is included within a range of ±10° around the sheet surface normal line is 0.99×B45 max or higher may be satisfied, and the same condition may also be satisfied for each of the second direction, the third direction, and the fourth direction.

(4) According to another aspect of the present invention, there is provided a method of manufacturing a non-oriented electrical steel sheet including hot rolling a sheet bar obtained by rough rolling a slab under a condition that a hot finish rolling start temperature ranges from 800°C to 1,150°C, a hot finish rolling temperature is lower than 750°C, and a rolling speed of a hot finish rolling mill on a last stand outlet side is 300 m/min or slower; and cold rolling a hot rolled steel sheet obtained by the hot rolling, at a reduction higher than 87%.

(5) According to another aspect of the present invention, there is provided a method of manufacturing a non-oriented electrical steel sheet including hot rolling a sheet bar obtained by rough rolling a slab under a condition that a hot finish rolling start temperature ranges from 800°C to 1,150°C, a hot finish rolling temperature is 800°C or lower, a reduction of hot finish rolling is 94% or higher, and a rolling speed of a hot finish rolling mill on a last stand outlet side is 300 m/min or slower.

(6) According to another aspect of the present invention, there is provided a claw pole motor which uses the non-oriented electrical steel sheet according to any one of (1) to (3) as a stator core, the stator core is formed by using a strip-shaped blank which is punched such that an orientation of a claw pole forms an angle of 45° with respect to a rolling direction of the non-oriented electrical steel sheet.

[Effects of the Invention]

According to the aspects of the present invention, it is possible to obtain the non-oriented electrical steel sheet suitable for manufacturing a low-cost claw pole motor having excellent magnetic properties, high efficiency, and a small size; the manufacturing method therefor; and the claw pole motor made of the non-oriented electrical steel sheet, while the equipment problems of the technologies in the related art are solved.

[Brief Description of the Drawings]

FIG. 1 is a plan view of a non-oriented electrical steel sheet according to an embodiment of the present invention.
FIG. 2 is a plan view showing an example of punching a strip-shaped blank for forming a stator core of a claw pole motor from the non-oriented electrical steel sheet according to the present embodiment.
FIG. 3 is a plan view showing an example of a strip-shaped blank for forming a stator core of a claw pole motor according to the present embodiment.
FIG. 4 is a perspective view showing a state where the strip-shaped blank in FIG. 3 is worked into a cylindrical shape.
FIG. 5 is a perspective view showing a working state succeeding FIG. 4.
FIG. 6A is a view showing a process of inserting a coil, in a process of producing a stator by inserting the coil into a stator core.
FIG. 6B is a view showing a process of bending a lower side of the coil of the stator core, in the process of producing a stator by inserting the coil into the stator core.
FIG. 6C is a completion drawing of a stator produced through the processes shown in FIGS. 6A and 6B.
FIG. 7 is a perspective view showing a working state succeeding FIG. 6C.
FIG. 8 is a perspective view of the appearance of a completed claw pole motor.
FIG. 9 is a perspective view of the appearance of the claw pole motor equipped with an outside plate.
FIG. 10 is a graph in which an angle with respect to a rolling direction is a horizontal axis and a ratio of magnetic flux density in a direction of each angle to magnetic flux density in a direction of 45° (maximum magnetic flux density) is a vertical axis.

[Embodiments of the Invention]

Hereinafter, an embodiment of the present invention will be described with reference to the drawings. In this specification and the drawings, the same reference signs are applied to elements having substantially the same functional configuration and overlapping description will be omitted.

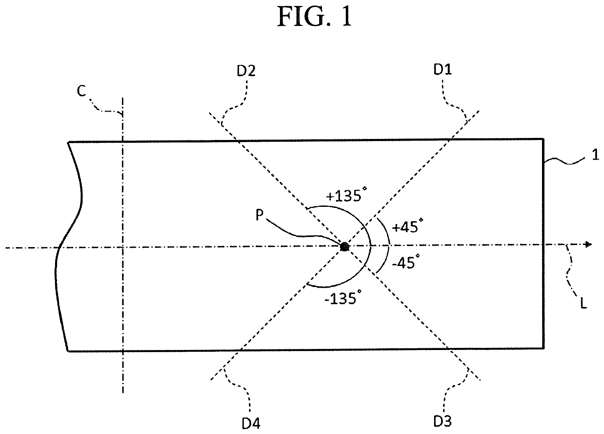

FIG. 1 is a plan view of a non-oriented electrical steel sheet 1 according to the embodiment of the present invention. As shown in FIG. 1, in the present embodiment, as a steel sheet for a stator core of a claw pole motor, the strip-shaped non-oriented electrical steel sheet 1, in which magnetic flux density in a direction forming 45° with respect to a rolling direction L within a sheet surface is higher than magnetic flux density in the rolling direction L and magnetic flux density in a transverse direction C that is a direction forming 90° with respect to the rolling direction L, is used.
As shown in FIG. 1, in the present embodiment, a direction inclined at an angle of 45° counterclockwise around a sheet surface normal line P (axis orthogonal to the sheet surface) with respect to the rolling direction L is referred to as a first direction D1, and a direction inclined at an angle of 135° counterclockwise is referred to as a second direction D2. In addition, a direction inclined at an angle of 45° clockwise around the sheet surface normal line P with respect to the rolling direction L is referred to as a third direction D3, and a direction inclined at an angle of 135° clockwise is referred to as a fourth direction D4. Hereinafter, there are cases where positive and negative reference signs are applied to angles while having a direction counterclockwise around the sheet surface normal line P as a positive orientation and a direction clockwise around the sheet surface normal line P as a negative orientation (refer to FIG. 1).
Each of the first direction D1, the second direction D2, the third direction D3, and the fourth direction D4 is a direction forming 45° with respect to the rolling direction L within the sheet surface. In the non-oriented electrical steel sheet 1 according to the present embodiment, each of the magnetic flux density in the first direction D1, the second direction D2, the third direction D3, and the fourth direction D4 is higher than the magnetic flux density in the rolling direction L and the magnetic flux density in the transverse direction C.
The average value of the magnetic flux density in the first direction D1, the magnetic flux density in the second direction D2, the magnetic flux density in the third direction D3, and the magnetic flux density in the fourth direction D4 with a magnetizing force of 5,000 A/m is regarded as B50 (45-ave.) by a unit T (tesla). In addition, the average value of the magnetic flux density in the rolling direction L and the magnetic flux density in the transverse direction C with a magnetizing force of 5,000 A/m is regarded as B50 (L+C) by the unit T (tesla). In this case, in the non-oriented electrical steel sheet 1 according to the present embodiment, it is preferable that the following Expression (1) is established.

$$B50 \ (L+C)+0.020 < B50 \ (45\text{-ave.}) \ ... \ (1)$$

In a case where the magnetic flux density in each direction with a magnetizing force of 5,000 A/m is measured by using an Epstein device, an Epstein measurement value is used as a measurement value of the magnetic flux density. In addition, in a case where the magnetic flux density in each direction with a magnetizing force of 5,000 A/m is measured by using a single strip tester (SST), samples cut in each direction are used, and the average value of measurements as many as the samples is taken.

In the non-oriented electrical steel sheet 1 according to the present embodiment, it is preferable that the magnetic flux density is the highest in the first direction D1 among directions in which an angle with respect to the rolling direction L is included within a range from 0° to 90° counterclockwise around the sheet surface normal line P (that is, the directions include the rolling direction L and the transverse direction C). Here, it is preferable that when the magnetic flux density in the first direction D1 is B45 max, a condition that magnetic flux density in a direction in which an angle with respect to the first direction D1 is included within a range of ±10° around the sheet surface normal line P is 0.99×B45 max or higher is satisfied.

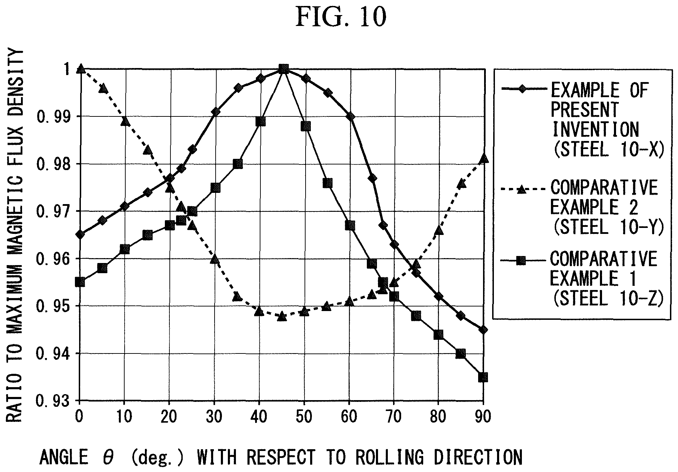

That is, it is preferable that the distribution of the magnetic flux density has a certain width with respect to an angle range centering on an angle in the first direction D1 (+45°) at which the magnetic flux density is maximized among directions in which an angle with respect to the rolling direction L is included within a range from 0° to +90°, rather than the magnetic flux density in the first direction D1 is outstandingly high (refer to FIG. 10 to be described below). It is more preferable that the magnetic flux density in a direction in which an angle with respect to the first direction D1 is included within a range of ±15° around the sheet surface normal line P is 0.99×B45 max or higher.

Similarly, it is preferable that the magnetic flux density is the highest in the second direction D2 among directions in which an angle with respect to the rolling direction L is included within a range from 90° to 180° counterclockwise around the sheet surface normal line P (that is, the directions also include the rolling direction L and the transverse direction C). It is preferable that the second direction D2 also satisfies the same condition as the condition for the first direction D1.

That is, it is preferable that when the magnetic flux density in the second direction D2 is B135 max, a condition that the magnetic flux density in a direction in which an angle with respect to the second direction D2 is included within a range of ±10° around the sheet surface normal line P is 0.99×B135 max or higher is satisfied. It is more preferable that the magnetic flux density in a direction in which an angle with respect to the second direction D2 is included within a range of ±15° around the sheet surface normal line P is 0.99×B135 max or higher.

Similarly, it is preferable that the magnetic flux density is the highest in the third direction D3 among directions in which an angle with respect to the rolling direction L is included within a range from 0° to 90° clockwise around the sheet surface normal line P (that is, the directions also include the rolling direction L and the transverse direction C). It is preferable that the third direction D3 also satisfies the same condition as the condition for the first direction D1.

That is, it is preferable that when the magnetic flux density in the third direction D3 is B45 max', a condition that the magnetic flux density in a direction in which an angle with respect to the third direction D3 is included within a range of ±10° around the sheet surface normal line P is 0.99×B45 max' or higher is satisfied. It is more preferable that the magnetic flux density in a direction in which an angle with respect to the third direction D3 is included within a range of ±15° around the sheet surface normal line P is 0.99×B45 max' or higher.

Similarly, it is preferable that the magnetic flux density is the highest in the fourth direction D4 among directions in which an angle with respect to the rolling direction L is included within a range from 90° to 180° clockwise around the sheet surface normal line P (that is, the directions also include the rolling direction L and the transverse direction C). It is preferable that the fourth direction D4 also satisfies the same condition as the condition for the first direction D1.

That is, it is preferable that when the magnetic flux density in the fourth direction D4 is B135 max', a condition that the magnetic flux density in a direction in which an angle with respect to the fourth direction D4 is included within a range of ±10° around the sheet surface normal line P is 0.99×B135 max' or higher is satisfied. It is more preferable that the magnetic flux density in a direction in which an angle with respect to the fourth direction D4 is included within a range of ±15° around the sheet surface normal line P is 0.99×B135 max' or higher.

The non-oriented electrical steel sheet 1 having features of higher magnetic flux density in the directions forming 45° with respect to the rolling direction L (first direction D1, the second direction D2, the third direction D3, and the fourth direction D4) than the magnetic flux density in the rolling direction L and the transverse direction C is manufactured by controlling hot rolling and cold rolling as described below. In the method of manufacturing the non-oriented electrical steel sheet 1, it is important to control the condition for hot rolling, and there is no particular restriction to control for annealing. The properties of the non-oriented electrical steel sheet 1 are utilized to a maximum degree, and efficiency of the claw pole motor can be drastically ameliorated by using such a non-oriented electrical steel sheet 1 as a stator core of the claw pole motor.

The efficiency of the claw pole motor can be drastically ameliorated by means of the non-oriented electrical steel sheet 1 having the above-described features. In a case of a bidirectional electrical steel sheet having excellent magnetic properties in the rolling direction and the transverse direction, or a non-oriented electrical steel sheet and a hot rolled steel sheet having excellent magnetic properties in the whole circumferential direction in the related art, a reason that such an effect is not achieved is assumed as follows.

It is assumed as a reason thereof that in the non-oriented electrical steel sheet 1 having the above-described features, for some reason such as the ameliorated texture or the ameliorated crystal structure, the amount of residual strain introduced to a steel sheet at the time of sheet metal working is reduced, and a flow of a magnetic flux inside a core of the formed claw pole motor is drastically ameliorated as a result. According to an examination of the inventors, it has become obvious that this effect becomes noticeable in a claw pole motor using a claw pole motor core in which a bend radius R of the core is 10 mm or shorter or which is bent at a substantially right angle.

In a case where the non-oriented electrical steel sheet 1 having the above-described features is manufactured through cold rolling, in hot rolling, hot rolling is performed with respect to a sheet bar obtained by rough rolling a slab, such that a hot finish rolling temperature becomes lower than 750°C. Thereafter, in cold rolling, cold rolling is performed with respect to the hot rolled steel sheet obtained by the hot rolling, at a reduction higher than 87%. Then, the non-oriented electrical steel sheet 1 thereof is manufactured. From a viewpoint of improving magnetic properties in the direction forming 45° with respect to the rolling direction L, it is preferable for a hot finish rolling start temperature in the hot rolling to range from 800°C to 1,150°C and it is more preferable to range from 900°C to 1,050°C. Although no lower limit is provided for the hot finish rolling temperature, it is preferable to be 500°C or higher from a viewpoint of rolling properties. From a viewpoint of improving magnetic properties in the direction forming 45° with respect to the rolling direction L, it is preferable for the rolling speed in the hot rolling to be 300 m/min or slower by a speed on a last stand outlet side of a hot finish rolling mill and it is more preferable to be 200 m/min or slower. From a viewpoint of productivity, it is preferable for the rolling speed to be 20 m/min or faster.

In addition, in a case where the non-oriented electrical steel sheet 1 having the above-described features is manufactured through hot rolling, in the hot rolling, hot rolling is performed with respect to a sheet bar obtained by rough rolling a slab, under a condition that the hot finish rolling temperature ranges from 800°C to 650°C and a reduction of hot finish rolling is 94% or higher, such that recrystallization of the hot rolled steel sheet in low-temperature finishing is suppressed. Although no upper limit is particularly provided for the reduction of hot finish rolling, it is preferable to be 98.5% or less from a viewpoint of productivity. Accordingly, a texture having excellent magnetic properties in a direction of 45° with respect to the rolling direction is formed. From a viewpoint of improving magnetic properties in the direction forming 45° with respect to the rolling direction L, it is preferable for the hot finish rolling start temperature to range from 800°C to 1,150°C and it is more preferable to range from 900°C to 1,050°C. If the hot finish rolling temperature is excessively low, magnetic properties deteriorate due to residual stress. Therefore, it is preferable that the lower limit is set to 650°C. In addition, if the hot finish rolling temperature is excessively high, recrystallization occurs in the hot rolled steel sheet after passing through the last stand of the hot finish rolling mill, so that a desired texture cannot be obtained. Therefore, the upper limit is set to 800°C. From a viewpoint of improving magnetic properties in the direction forming 45° with respect to the rolling direction L, it is preferable for the rolling speed to be 300 m/min or slower by a speed on the last stand outlet side of a hot finish rolling apparatus and it is more preferable to be 200 m/min or slower. From a viewpoint of productivity, it is preferable for the rolling speed to be 20 m/min or faster.

Lubricated hot rolling in which an oil/fat emulsion of 0.5 to 20% by the volume fraction is incorporated into cooling water of a hot rolling roll may be performed.

As described above, in the method of manufacturing the non-oriented electrical steel sheet 1 according to the present embodiment, after a slab is heated, rough rolling is performed to obtain a sheet bar, hot finish rolling is performed at a low speed, and finishing is performed at a low temperature. Since a material to be rolled has a large sheet thickness, it is difficult to perform rough rolling at a low temperature with a roughing mill in existence. Therefore, it is preferable that rough hot rolling is performed within a range from 800°C to 1,250°C, that is, a temperature range of a known technology in the related art. It is more preferable that rough rolling is performed within a temperature range from 850°C to 1,050°C.

There are two methods for lowering the hot finish rolling temperature in hot finish rolling, that is, a method of lowering the hot finish rolling start temperature, and a method of controlled cooling in various ways during hot finish rolling while having approximately the same hot finish rolling start temperature as that of a known technology in the related art.

Here, in a case where the hot finish rolling start temperature is lowered, the temperature of the sheet bar after rough rolling needs to be evenly lowered to a predetermined temperature. Methods therefor include a method as follows. A thin slab is used, and it is subjected to rough rolling. Thereafter, it is coiled around a tunnel furnace or a coil box furnace and is subjected to soaking retention. In this method, the hot finish rolling start temperature can be accurately controlled and the hot finish rolling temperature can be lowered. However, there is a problem of reducing the cooling time of the sheet bar after rough rolling. Since the temperature of the cooling becomes 200°C or higher in general, there is a need to realize cooling of a thick sheet bar in a short period of time.

In the method of manufacturing the non-oriented electrical steel sheet 1 according to the present embodiment, in order to start hot finish rolling at a low temperature, hot finish rolling may start after a sheet bar is subjected to steam cooling, contact heat transfer cooling using a dedicated cooling roll, or cooling of a combination thereof to reach a predetermined temperature.

In addition, in order to further improve magnetic properties in the direction forming 45° with respect to the rolling direction L, it is preferable that cooling is achieved during hot finish rolling by low-speed rolling, without especially cooling of the sheet bar. Accordingly, while having each of the angle of the first direction D1 (+45°), the angle of the second direction D2 (+135°), the angle of the third direction D3 (-45°), and the angle of the fourth direction D4 (-135°) as a center, it is possible to obtain the non-oriented electrical steel sheet 1 having excellent magnetic properties, in which the magnetic flux density in a direction included within a range of ±10° around the sheet surface normal line P (±15° for more excellent magnetic properties) has a value of 0.99 times or greater than the maximum magnetic flux density in each direction of the central angle.

In order to realize such magnetic properties, as described above, it is preferable for the rolling speed to be 300 m/min or slower by the speed on the last stand outlet side of the hot finish rolling mill and it is more preferable to be 200 m/min or slower. From a viewpoint of productivity, it is preferable for the rolling speed to be 20 m/min or faster. Therefore, as necessary, it is desirable to have the even temperature distribution in the transverse direction C by controlling cooling between the stands in the hot finish rolling mill. In addition, due to the slow finish rolling speed, it is desirable to perform controlled hot rolling such that the temperature distribution in a longitudinal direction of a hot finish rolled coil from a leading end portion to a trailing end portion of the coil is evenly retained.

As a method of realizing this technology, a bar heater is installed on a rear surface of the roughing mill, a front surface of the hot finish rolling mill, or between the stands in the hot finish rolling mill, and temperature compensation in the coil width direction and the longitudinal direction is performed as necessary. In addition, in regard to cooling in hot finish rolling as well, in order to perform the temperature compensation for an end portion of a hot rolled sheet of which the temperature is likely to be lowered in low-speed hot rolling, there is a need to realize a cooling rate which differs in the transverse direction by a cooling method which differs in the transverse direction. Since the contact time between the roll and the material to be rolled is long due to low-speed hot finish rolling, cooling is performed through contact with the roll as necessary by suitably cooling the roll of the hot finish rolling mill. From a viewpoint of its life span, it is difficult to provide a temperature deviation in the roll width direction. Therefore, it is preferable that cooling compensation in the transverse direction is performed between the stands and cooling control due to a heat release from the roll is performed in the longitudinal direction of the steel sheet.

The components of the non-oriented electrical steel sheet 1 according to the present embodiment need only be those of an ordinary non-oriented electrical steel sheet, and no particular restriction is provided. However, an example of the components which is preferable from a viewpoint of ensuring general magnetic properties of the non-oriented electrical steel sheet 1 is described below. However, the components do not define a component system of a non-oriented electrical steel sheet having a texture intended by the present invention, in a limited manner.

As the components of the non-oriented electrical steel sheet 1 according to the present embodiment by mass%, $0.1 \leq Si \leq 6.5$ and $0.1 \leq Mn \leq 1.5$ are included. Although it is not essential to be added, in a case where Al is added, $0.1 \leq Al \leq 2.5$ is included. The components thereof also include $C \leq 0.003$, $N \leq 0.003$, $S \leq 0.003$, a remainder of Fe, and unavoidable impurities.

If Si, Mn, and Al are less than 0.1%, an increase in an electrical resistance rate when the components are added to the non-oriented electrical steel sheet 1 is not sufficient, so that a desired low-iron loss cannot be achieved. Therefore, it is preferable that Si, Mn, and Al of 0.1% or more are added. If the addition amount of Si exceeds 6.5%, properties of hot rolling and cold rolling deteriorate. Therefore, it is preferable that Si is 6.5% or less. If the addition amount of Mn exceeds 1.5% exceeds, the texture amelioration effect due to the addition effect is saturated and becomes uneconomical. Therefore, it is preferable that Mn is 1.5% or less. It is not essential to add Al. If the addition amount of Al exceeds 2.5%, a hysteresis loss increases and an iron-loss amelioration effect in the non-oriented electrical steel sheet 1 having a high electrical resistance rate is saturated. Therefore, it is preferable that the addition amount thereof is controlled to be 2.5% or less.

If the C content exceeds 0.003%, there is a problem that the value of an iron loss increases due to magnetic aging while the non-oriented electrical steel sheet 1 is in use. Therefore, it is preferable that the C content is 0.003% or less. If the N content exceeds 0.003%, various fine nitrides are formed in a steel, thereby hindering growth of grains of the non-oriented electrical steel sheet 1 or hindering movement of magnetic walls, both of which cause an increase in an iron loss. Therefore, it is preferable that the N content is 0.003% or less. If the S content exceeds 0.003%, sulfides are solutionized while a slab is heated and are finely precipitated during hot finish rolling, thereby hindering growth of grains of the non-oriented electrical steel sheet 1 or hindering movement of magnetic walls, both of which cause an increase in an iron loss. Therefore, it is preferable that the S content is 0.003% or less.

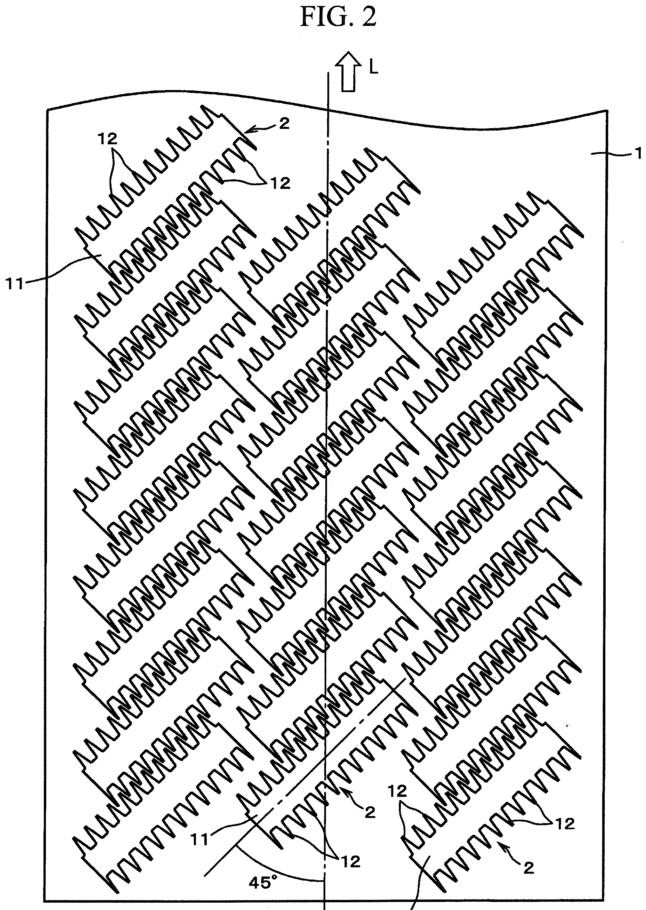

FIG. 2 is a plan view showing an example of punching a strip-shaped blank for forming a stator core of a claw pole motor from a steel sheet. As described above, a steel sheet 1 is a non-oriented electrical steel sheet having higher magnetic flux density in the direction forming 45° with respect to the rolling direction L than the magnetic flux density in the rolling direction L and the magnetic flux density in the transverse direction C. A strip-shaped blank 2 is punched at an angle of 45° with respect to the rolling direction L of the steel sheet 1. The strip-shaped blank 2 has a plurality of claw poles 12, for example, 12 poles or 24 poles each in the perpendicular direction with respect to the longitudinal direction of the core back portion 11 on both sides of a strip-shaped core back portion 11 in the width direction. In this manner, as the strip-shaped blank 2 is punched at an angle of 45° from the non-oriented electrical steel sheet having excellent magnetic properties in the direction forming 45° with respect to the rolling direction L, the strip-shaped blank 2 has excellent magnetic properties in both the longitudinal direction of the core back portion 11 and the direction of the claw poles 12. In the present embodiment, the strip-shaped blank 2 is integrally worked, and the stator core of the claw pole motor is formed.

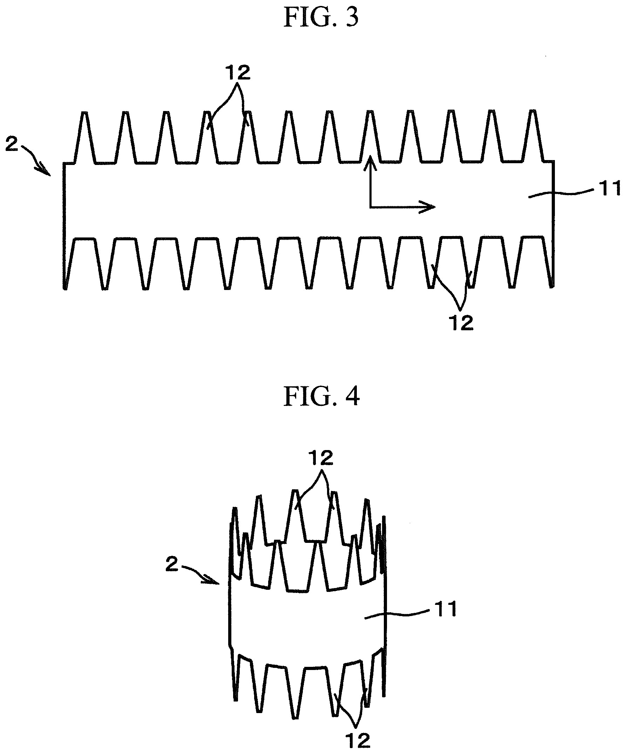

FIGS. 3 to 9 show a procedure of producing a claw pole motor from the strip-shaped blank 2 which is punched as in FIG. 2. Hereinafter, an overview of the procedure of producing a claw pole motor will be described.

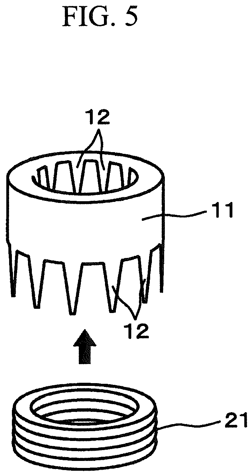

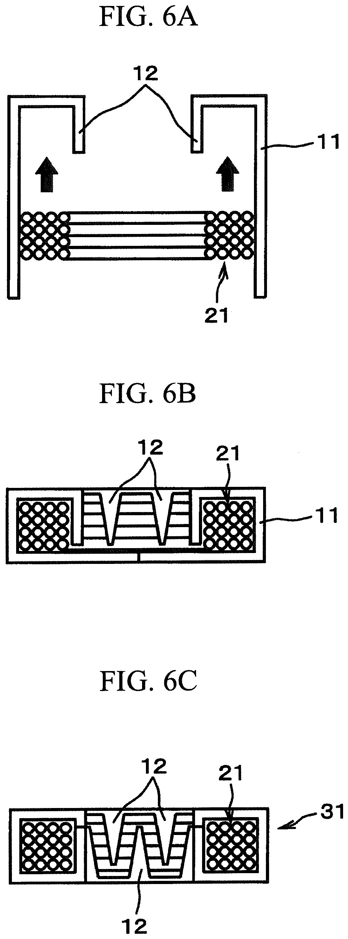

As shown in FIG. 2, the strip-shaped blank 2 punched at an angle of 45° from the steel sheet 1 has excellent magnetic properties in directions indicated with arrows in FIG. 3, that is, the longitudinal direction of the core back portion 11 and the direction of the claw poles 12. The strip-shaped blank 2 is caused to have a tubular shape through sheet metal working as shown in FIG. 4. Moreover, as shown in FIG. 5, one side of the core back portion 11 in the width direction, that is, the claw poles 12 on the upper side in FIG. 5 are folded inward, and a coil 21 is inserted thereinto from below. As shown in FIG. 6A, as the claw poles 12 are bent at a substantially right angle from the core back portion 11, the coil 21 is inserted into a space which is formed between the core back portion 11 and the claw poles 12. Thereafter, as shown in FIGS. 6B and 6C, the claw poles 12 on the opposite side (lower side in FIGS. 6B and 6C) are also folded to the inner side of the core back portion 11. As shown in FIG. 6C, the claw poles 12 facing each other have a structure in which the poles are alternately positioned.

For the purpose of ameliorating workability or for other purposes, in the steps of FIGS. 6A, 6B, and 6C, each process of work may be performed in a state where the members are turned upside down.

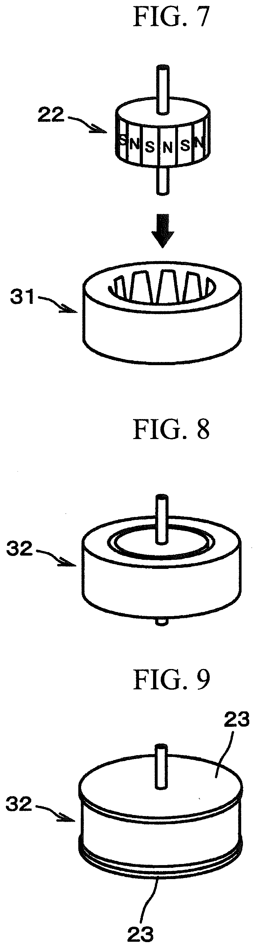

A stator 31 of the claw pole motor is completed as above. As shown in FIG. 7, for example, a permanent magnet-type rotor 22 is inserted into the stator 31, and an outer stator-type claw pole motor 32 is completed as shown in FIG. 8. Moreover, for example, as shown in FIG. 9, outer plates 23 are attached thereto and the claw pole motor 32 is used.

As described above, in the claw pole motor 32 in which the strip-shaped blank 2 is integrally worked through sheet metal working and is formed as a stator core, the direction of the core back portion 11 of the stator 31 is a certain direction of the steel sheet 1 (material). Both the core back portion 11 and the claw poles 12 utilize the direction forming 45° with respect to the rolling direction L that is a direction in which the steel sheet 1 exhibits excellent magnetic properties. As a member integrally formed from the strip-shaped blank 2 is used as the stator core of the claw pole motor, efficiency of the claw pole motor is drastically ameliorated.

In addition, since the non-oriented electrical steel sheet 1 according to the present embodiment can be manufactured by a simpler method than that for a bidirectional electrical steel sheet, the cost can be drastically reduced compared to a case of using a bidirectional electrical steel sheet. Furthermore, since the core can be punched through integrated punching, the manufacturing cost of a core can also be reduced. Moreover, since high magnetic flux density can be obtained with a low magnetic field, the quantity of a copper wire required as an exciting winding wire can be reduced, and since there is no need to split the core, the manufacturing cost thereof can also be reduced. That is, it is possible to realize a low-cost claw pole motor having a small size, high torque, and high efficiency.

Hereinabove, a preferable embodiment of the present invention has been described, and the present invention is not limited to the example. It is obvious that those skilled in the art can conceive various modification examples or revision examples within the scope of the technical idea disclosed in Claims, and it is understood that those naturally belong to the technical scope of the present invention as well.

[Example]

(Example 1)

Steels 1 to 3 including the components shown in Table 1 were melted and made into slabs having a thickness of 200 mm through continuous casting. The slabs were heated to 1,100°C and were made into sheet bars having a thickness of 40 mm through rough rolling. Various hot finish rolling start temperatures F0T were respectively set to the sheet bars as shown in Table 2, finish rolling was performed, and hot rolled steel sheets of 2.0 mm were obtained. In order to control the temperature of the sheet bars after rough rolling, the sheet bars were cooled through steam cooling and by means of a dedicated cooling roll, and a bar heater was used for compensating for the temperature. In addition, the hot finish rolling temperature was controlled while having the rolling speed on the last stand outlet side of the hot finish rolling mill ranging from 100 m/min to 250 m/min. The bar heater installed between the stands was used together with cooling between the stands such that the hot finish rolling temperature becomes uniform. Moreover, the sheet bars were subjected to pickling, and various cold-rolling reductions were respectively set thereto. After cold rolling was performed, finish annealing was performed. As the conditions for finish annealing, the steels 1 were set at 750°C for 30 seconds, the steels 2 were set at 950°C for 20 seconds, and the steels 3 were set at 1,050°C for 20 seconds. Thereafter, B50 (45-ave.) and B50 (L+C) of each of the steel sheets were measured. In regard to the F0T and the cold-rolling reduction, numerical values beyond the range of the present invention in a case where a non-oriented electrical steel sheet was manufactured through cold rolling were underlined.

At the same time, claw pole motors and ordinary motors equipped with a winding wire wound around teeth of a stator were made by respectively using the steel sheets, and the maximum efficiency of each thereof was examined. Sheet metal bending at the time of making the claw pole motor was set to a right angle as shown in FIG. 6(a). The results are shown in Table 2.

[Table 1]

|  | Si | Mn | Al | C | N | S |
|---|---|---|---|---|---|---|
| Steel 1 | 0.30 | 0.20 | tr. | 0.0009 | 0.0007 | 0.0003 |
| Steel 2 | 2.01 | 0.22 | 0.31 | 0.0008 | 0.0007 | 0.0005 |
| Steel 3 | 3.10 | 0.25 | 1.22 | 0.0007 | 0.0006 | 0.0005 |

[Table 2]

|  | F0T (°C) | Cold-rolling reduction (%) | B50 (45-ave.) -B50 (L+C) (T) | Maximum efficiency in case of being used in ordinary motor (%) | Maximum efficiency in case of being used in claw pole motor (%) | Determination |
|---|---|---|---|---|---|---|
| Steel 1 | 800 | 85 | -0.04 | 78.1 | 78 | Comparative Example |
| Steel 1 | 800 | 89 | -0.03 | 84.9 | 85 | Comparative Example |
| Steel 1 | 730 | 85 | 0.01 | 90.2 | 90 | Comparative Example |
| Steel 1 | 730 | 89 | 0.06 | 92.2 | 95 | Present Invention |
| Steel 1 | 650 | 85 | 0.02 | 90.5 | 90.6 | Comparative Example |
| Steel 1 | 650 | 89 | 0.06 | 91 | 95.5 | Present Invention |
| Steel 1 | 550 | 85 | 0.02 | 91.2 | 91.3 | Comparative Example |
| Steel 1 | 550 | 89 | 0.07 | 91.9 | 96 | Present Invention |
| Steel 2 | 800 | 85 | -0.03 | 79 | 78.8 | Comparative Example |
| Steel 2 | 800 | 89 | -0.03 | 84.8 | 84.6 | Comparative Example |
| Steel 2 | 730 | 85 | 0.01 | 90.1 | 89.8 | Comparative Example |
| Steel 2 | 730 | 89 | 0.05 | 92.5 | 94.9 | Present Invention |

(continued)

| | F0T (°C) | Cold-rolling reduction (%) | B50 (45-ave.) -B50 (L+C) (T) | Maximum efficiency in case of being used in ordinary motor (%) | Maximum efficiency in case of being used in claw pole motor (%) | Determination |
|---|---|---|---|---|---|---|
| Steel 2 | 650 | 85 | 0.01 | 90.3 | 90.1 | Comparative Example |
| Steel 2 | 650 | 89 | 0.06 | 91.3 | 95.2 | Present Invention |
| Steel 2 | 550 | 85 | 0.02 | 90 | 90 | Comparative Example |
| Steel 2 | 550 | 89 | 0.06 | 92.3 | 94.8 | Present Invention |
| Steel 3 | 800 | 85 | -0.03 | 79.1 | 78.9 | Comparative Example |
| Steel 3 | 800 | 89 | -0.02 | 84.9 | 84.6 | Comparative Example |
| Steel 3 | 730 | 85 | 0.01 | 90 | 89.7 | Comparative Example |
| Steel 3 | 730 | 89 | 0.04 | 92.4 | 94.8 | Present Invention |
| Steel 3 | 650 | 85 | 0.01 | 90.4 | 90.2 | Comparative Example |
| Steel 3 | 650 | 89 | 0.05 | 92.6 | 95.1 | Present Invention |
| Steel 3 | 550 | 85 | 0.01 | 89.8 | 89.6 | Comparative Example |
| Steel 3 | 550 | 89 | 0.05 | 92.2 | 95.9 | Present Invention |

From Table 2, it is ascertained that in the case where the hot finish rolling start temperature F0T is lower than 750°C and the cold-rolling reduction exceeds 87%, the value of 50 (45-ave.)-B50 (L+C) becomes 0.04 T or greater and the magnetic flux density in the direction forming 45° with respect to the rolling direction becomes excellent. Moreover, it is ascertained that in the case where a claw pole motor is made with a non-oriented electrical steel sheet obtained by this manufacturing method, excellent maximum efficiency of 94.0% or more is obtained. Then, in the case of the ordinary motors, the maximum efficiency as much as those of the claw pole motors could not be obtained.

(Example 2)

Steels including the components shown in Table 3 were melted and made into slabs having a thickness of 200 mm through continuous casting. The slabs were heated to 1,100°C and were made into sheet bars having a thickness of 20 mm rough rolling. Various hot finish rolling temperatures FT and reductions were respectively set to the sheet bars as shown in Table 4, and finish rolling was performed. In this case, the hot finish rolling start temperature was set to 950°C, and in order to adjust the hot finish rolling temperature, the rolling speed on the last stand outlet side of the hot finish rolling mill was set to range from 150 m/min to 300 m/min. In order to make the temperature distribution of hot finish rolled sheets uniform in the transverse direction and the longitudinal direction, the temperature was controlled by bar heaters installed in front of the hot finish rolling mill and between the hot finish rolling mills. In addition, controlled cooling in the transverse direction and the longitudinal direction was performed between hot finish rolling stands. In order to control the temperature of hot finish rolling, not only cooling water was directly sprayed over the steel sheet, but also cooling of a rolling roll was controlled, so that the hot finish rolling temperature was controlled by controlling a heat release from the roll. B50 (L+C) and B50 (45-ave.) of each of the hot rolled steel sheets were measured. In regard to the FT and the rolling reduction, numerical values beyond the range of the present invention in a case where a non-oriented electrical steel sheet was manufactured through hot rolling were underlined.

At the same time, claw pole motors and ordinary motors equipped with a winding wire wound around teeth of a stator were made by respectively using the steel sheets, and the maximum efficiency of each thereof was examined. A radius R in sheet metal bending at the time of making the claw pole motor was set to 3 mm. The results are shown in Table 4.

[Table 3]

|  | Si | Mn | Al | C | N | S |
|---|---|---|---|---|---|---|
| Steel 4 | 0.31 | 0.19 | tr. | 0.0007 | 0.0007 | 0.0005 |
| Steel 5 | 2.00 | 0.21 | 0.30 | 0.0008 | 0.0006 | 0.0005 |
| Steel 6 | 3.11 | 0.23 | 1.20 | 0.0007 | 0.0006 | 0.0006 |

[Table 4]

|  | FT (°C) | Reduction of sheet bar (%) | B50 (45-ave.) -B50 (L+C) (T) | Maximum efficiency in case of being used in ordinary motor (%) | Maximum efficiency in case of being used in claw pole motor (%) | Determination |
|---|---|---|---|---|---|---|
| Steel 4 | 825 | 92 | -0.04 | 78 | 77.9 | Comparative Example |
| Steel 4 | 825 | 96 | -0.04 | 84.8 | 84.6 | Comparative Example |
| Steel 4 | 780 | 92 | 0.01 | 90.1 | 90 | Comparative Example |
| Steel 4 | 780 | 96 | 0.05 | 92 | 95.6 | Present Invention |
| Steel 4 | 730 | 92 | 0.02 | 90.6 | 90.6 | Comparative Example |
| Steel 4 | 730 | 96 | 0.06 | 91.3 | 95.8 | Present Invention |
| Steel 4 | 650 | 92 | 0.02 | 91.2 | 91.2 | Comparative Example |
| Steel 4 | 650 | 96 | 0.06 | 91.8 | 96.5 | Present Invention |
| Steel 5 | 825 | 92 | -0.03 | 79.1 | 78.9 | Comparative Example |
| Steel 5 | 825 | 96 | -0.03 | 84.6 | 84.3 | Comparative Example |
| Steel 5 | 780 | 92 | 0.02 | 90 | 90 | Comparative Example |
| Steel 5 | 780 | 96 | 0.06 | 91.5 | 96 | Present Invention |
| Steel 5 | 730 | 92 | 0.02 | 90.4 | 90.4 | Comparative Example |
| Steel 5 | 730 | 96 | 0.06 | 91.4 | 96.3 | Present Invention |
| Steel 5 | 650 | 92 | 0.02 | 90.2 | 90.2 | Comparative Example |

(continued)

| | FT (°C) | Reduction of sheet bar (%) | B50 (45-ave.) -B50 (L+C) (T) | Maximum efficiency in case of being used in ordinary motor (%) | Maximum efficiency in case of being used in claw pole motor (%) | Determination |
|---|---|---|---|---|---|---|
| Steel 5 | 650 | 96 | 0.07 | 92.1 | 95.9 | Present Invention |
| Steel 6 | <u>825</u> | <u>92</u> | -0.03 | 79.3 | 79.1 | Comparative Example |
| Steel 6 | <u>825</u> | 96 | -0.02 | 84.8 | 84.5 | Comparative Example |
| Steel 6 | 780 | <u>92</u> | 0.01 | 89.9 | 89.6 | Comparative Example |
| Steel 6 | 780 | 96 | 0.05 | 92.6 | 96.6 | Present Invention |
| Steel 6 | 730 | <u>92</u> | 0.01 | 90.5 | 90.3 | Comparative Example |
| Steel 6 | 730 | 96 | 0.05 | 82.7 | 96.8 | Present Invention |
| Steel 6 | 650 | <u>92</u> | 0.02 | 89.7 | 89.7 | Comparative Example |
| Steel 6 | 650 | 96 | 0.05 | 92.3 | 96.9 | Present Invention |

From Table 4, it is ascertained that in a state where the FT is 800°C or lower and the reduction of the sheet bar is 94% or more, the magnetic flux density in the direction forming 45° with respect to the rolling direction becomes excellent. Moreover, it is ascertained that in the case where a claw pole motor is made with a non-oriented electrical steel sheet obtained by this manufacturing method, excellent maximum efficiency of 95.0% or more is obtained. Then, in the case of the ordinary motors, the maximum efficiency as much as those of the claw pole motors could not be obtained.

(Example 3)

Steels including the components shown in Table 5 were melted and made into slabs having a thickness of 200 mm through continuous casting. The slabs were heated to 1,100°C and were made into sheet bars having a thickness of 20 mm rough rolling. The constant hot rolling reduction of 96% was set to the sheet bars, and finish rolling was performed at three levels of the hot finish rolling temperature as shown in Table 6. In this case, the hot finish rolling temperature was adjusted such that the hot finish rolling start temperature became 900°C and the rolling speed on the last stand outlet side of the hot finish rolling mill ranged from 100 m/min to 200 m/min. In this case, the hot finish rolling start temperature was set to 950°C, and in order to adjust the hot finish rolling temperature, the rolling speed on the last stand outlet side of the hot finish rolling mill was set to range from 150 m/min to 300 m/min. In order to make the temperature distribution of hot finish rolled sheets uniform in the transverse direction and the longitudinal direction, the temperature was controlled by a bar heater and an edge heater installed between the hot finish rolling mills. In addition, controlled cooling in the transverse direction and the longitudinal direction was performed between hot finish rolling stands. In order to control the temperature of hot finish rolling, not only cooling water was directly sprayed over the steel sheet, but also cooling of a rolling roll was controlled, so that the hot finish rolling temperature was controlled by controlling a heat release from the roll. The claw pole motor was made by using the obtained hot rolled steel sheet. The radius R in sheet metal bending at the time of making the claw pole motor was set to 7 mm.

The maximum efficiency of the made claw pole motor was subjected to comparison while the claw pole motor having the hot finish rolling temperature of 675°C was regarded as 1.00. The results are shown in Table 6.

[Table 5]

|  | Si | Mn | Al | C | N | S |
|---|---|---|---|---|---|---|
| Steel 7 | 0.32 | 0.20 | tr. | 0.0006 | 0.0006 | 0.0006 |
| Steel 8 | 2.05 | 0.22 | 0.29 | 0.0007 | 0.0007 | 0.0005 |
| Steel 9 | 3.12 | 0.21 | 1.24 | 0.0007 | 0.0006 | 0.0006 |

[Table 6]

|  | Hot finish rolling temperature (°C) | Maximum efficiency in case of being used in ordinary motor (with respect to material of FT 675°C) | Maximum efficiency in case of being used in claw pole motor (with respect to material of FT 675°C) | Determination |
|---|---|---|---|---|
| Steel 7 | 625 | 0.91 | 0.93 | Comparative Example |
| Steel 7 | 675 | 1.00 | 1.00 | Present Invention |
| Steel 7 | 860 | 0.99 | 0.98 | Comparative Example |
| Steel 8 | 625 | 0.92 | 0.94 | Comparative Example |
| Steel 8 | 675 | 1.00 | 1.00 | Present Invention |
| Steel 8 | 860 | 0.99 | 0.97 | Comparative Example |
| Steel 9 | 625 | 0.91 | 0.95 | Comparative Example |
| Steel 9 | 675 | 1.00 | 1.00 | Present Invention |
| Steel 9 | 860 | 0.99 | 0.97 | Comparative Example |

From Table 6, it is ascertained that the maximum efficiency of the claw pole motor using the hot rolled steel sheet obtained at the hot finish rolling temperature of 625°C is lower than that at the hot finish rolling temperature of 675°C. As a reason thereof, it is assumed that residual strain inside the hot rolled steel sheet used in the claw pole motor has increased due to the excessively low hot finish rolling temperature. In addition, in regard to the maximum efficiency of the claw pole motor, the claw pole motor using the hot rolled steel sheet obtained at the hot finish rolling temperature of 675°C exhibits excellent maximum efficiency compared to that at the hot finish rolling temperature of 860°C. It is assumed that in the non-oriented electrical steel sheet according to the present embodiment, the texture of the hot rolled steel sheet exhibits features of improving the properties of the motor especially in a case of the claw pole motor.

(Example 4)

Steels including the components shown in Table 7 were melted and made into slabs having a thickness of 200 mm through continuous casting. The slabs were heated to 1,100°C and were made into sheet bars having a thickness of 20 mm rough rolling. The constant hot rolling reduction of 95% was set to the sheet bars, and hot rolled steel sheets of two types were obtained, that is, as an example of the present invention, a hot rolled steel sheet X which had excellent magnetic properties in the direction of 45° from the rolling direction and was obtained through finish rolling at the hot finish rolling temperature of 730°C, and as a comparative example, an ordinary non-oriented hot rolled steel sheet Y of which the magnetic properties in the direction of 45° from the rolling direction was not excellent and was obtained at the hot finish rolling temperature of 860°C. The hot finish rolling start temperature during hot finish rolling was set to 920°C, and the last stand passing speed was set to 110 m/min. In order to control the hot finish rolling temperature, controlled cooling between the stands, and an edge heater and a bar heater installed between the stands were used. In addition, in order to compare angular properties of the magnetic flux density of the electrical steel sheets, a comparative material, in which the hot finish rolling start temperature was set to 920°C, the last stand passing speed was set to 400 m/min, and the hot finish rolling temperature was set to 730°C, was simultaneously manufactured through hot finish rolling using a steel 10. This was referred to as a steel 10-Z. Other hot rolling conditions other than the hot finish rolling temperature were the same as those of a steel 10-X by controlled cooling. However, in the steel 10-Z, controlled cooling during hot finish rolling was strengthened so that a hot finish rolling temperature equivalent to that of the steel 10-X was obtained.

As a result of the measurement performed by using the SST at the number n=10, all of the hot rolled steel sheets X satisfied B50 (L+C)+0.020<B50 (45-ave.). Table 7 shows the measurement result of B50 (45-ave.)-B50 (L+C) together with the components of the sample material.

At the same time, the claw pole motors were made by respectively using the hot rolled steel sheets X and Y, and the maximum efficiency of each thereof was examined. When the claw pole motors were made, the radius R in sheet metal bending was varied. Table 8 shows the comparison of the maximum efficiency of the claw pole motor between the case of using the hot rolled steel sheet X as an example of the present invention and the case of using the hot rolled steel sheet Y as a comparative example.

[Table 7]

|  | Si | Mn | Al | C | N | S | B50(45-ave.)-B50(L+C)(T) |
|---|---|---|---|---|---|---|---|
| Steel 10-X | 0.3 | 0.19 | tr. | 0.0005 | 0.0005 | 0.0003 | 0.083 |
| Steel 10-Y | 0.3 | 0.19 | tr. | 0.0005 | 0.0005 | 0.0003 | -0.075 |
| Steel 11-X | 2.01 | 0.2 | 0.3 | 0.0006 | 0.0006 | 0.0004 | 0.061 |
| Steel 11-Y | 2.01 | 0.2 | 0.3 | 0.0006 | 0.0006 | 0.0004 | -0.054 |
| Steel 12-X | 3.11 | 0.21 | 1.22 | 0.0006 | 0.0005 | 0.0005 | 0.043 |
| Steel 12-Y | 3.11 | 0.21 | 1.22 | 0.0006 | 0.0005 | 0.0005 | -0.04 |

[Table 8]

| Material | Radius R of angle in sheet metal working (mm) | Examples of Present Invention | Comparative Examples |
|---|---|---|---|
|  |  | Maximum efficiency in case of using steel sheet X of manufacturing method of present invention (%) | Maximum efficiency in case of using steel sheet Y other than manufacturing method of present invention (%) |
| Steel 10 | 3 | 91.4 | 88.7 |
| Steel 10 | 8 | 91.3 | 90.8 |
| Steel 10 | 10 | 90.7 | 90.5 |
| Steel 10 | 12 | 89.8 | 89.8 |
| Steel 11 | 5 | 92.5 | 90.5 |
| Steel 11 | 7 | 92.4 | 90.9 |
| Steel 11 | 10 | 92.0 | 91.8 |
| Steel 11 | 13 | 91.0 | 91.0 |
| Steel 12 | 5 | 92.9 | 91.7 |
| Steel 12 | 7 | 92.8 | 92.2 |
| Steel 12 | 10 | 92.3 | 92.1 |
| Steel 12 | 11 | 91.8 | 91.8 |

From Table 8, it is ascertained that in a case where the radius R of the angle in sheet metal working is 10 mm or smaller, since residual stress due to bending becomes significant, the effect of the present invention is noticeably manifested. As a reason thereof, it is presumed that if the radius R in sheet metal working becomes 10 mm or greater, residual stress when being subjected to bending decreases, and when being used as a motor, since a flow of a magnetic flux in the core of a workpiece is ameliorated, it is unlikely to be affected by the texture or the crystal structure of the hot rolled steel sheet.

In addition, Table 8 shows a tendency that in a case where the steel sheet X of the example of the present invention is used, the efficiency increases as the radius R in sheet metal bending is reduced. However, it is presumed that since the space factor of the winding wire inside the core is improved as the radius of the angle is reduced, in a case of using the steel sheet which is unlikely to be affected by the residual stress in sheet metal working as the example of the present invention, the efficiency of the claw pole motor is improved.

The steel 10-X, the steel 10-Y, and the steel 10-Z were cut for each of the angles with respect to the rolling direction, and the values of magnetic flux density B50 were measured as Epstein samples. The angle was cut every 5°. In addition, samples in a direction forming 22.5° with respect to the rolling direction and in a direction forming 67.5° were also collected. In regard to collecting the samples, the samples in direction inclined by $\pm\theta$ (°) with respect to the rolling direction were collected, and the samples forming an angle of 90° or greater with respect to the rolling direction were handled to be the same as $\theta=(180-\theta)$.

As a result of measuring the magnetic flux density B50 of each of the samples, in the steel 10-X and the steel 10-Z, the magnetic flux density B50 of the sample forming $\pm45°$ with respect to the rolling direction and the sample forming $\pm135°$ indicated the highest magnetic flux density B45 max (steel 10-X) and B45 max (steel 10-Z) among the samples measured by varying the angles. In the steel 10-Y, the rolling direction B0 max (steel 10-Y) indicated the highest value of the magnetic flux density B50. In addition, while having these values set as 1.000, FIG. 10 shows the calculation result of the value of the relative ratio of each angle to the magnetic flux density B50 of the sample.

In B45 max (steel 10-X) of low-speed hot finish rolling at the last stand passing speed of 110 m/min in hot finish rolling satisfying the condition for hot rolling of the present invention and B45 max (steel 10-Z) at the last stand passing speed of 400 m/min in hot finish rolling of the comparative example, the magnetic flux density of the present invention exhibited a higher value. In FIG. 10, the average value of four directions forming $\pm45°$ and $\pm135°$ with respect to the rolling direction was indicated as 45° on the horizontal axis. In addition, the average value of the samples forming angles in two directions inclined by $\theta$ other than $\pm45°$ with respect to the rolling direction was collectively indicated as $\theta$ on the horizontal axis. In addition, the rolling direction was indicated as 0° and the transverse direction was indicated as 90° on the horizontal axis.

As seen from FIG. 10, in the non-oriented electrical steel sheet of the present invention, with respect to B45 max (steel 10-X) that is the maximum value of the magnetic flux density in the direction forming $\pm45°$ and $\pm135°$ with respect to the rolling direction, the value exceeds 0.99 times B45 max (steel 10-X) within the angle range from 35° to 55° on the horizontal axis which is a range of $\pm10°$ centering on 45°, and the value is maintained to be equal to or greater than 0.99 times B45 max within the angle range from 30° to 60° on the horizontal axis which is a range of $\pm15°$.

In contrast, in B45 max (steel 10-Z) of the comparative example, the value falls below 0.99 times within the angle range from 40° to 50° on the horizontal axis which is a range of $\pm5°$ centering on 45°, and the value falls below 0.98 times within the angle range from 35° to 55° on the horizontal axis which is a range of $\pm10°$. The magnetic flux density B50 in a direction at an angle deviated from the direction forming 45° indicting the maximum value of the magnetic flux density is noticeably low. In B0 max (steel 10-Y) of the comparative example, the value of the magnetic flux density B50 becomes the highest at $\theta=0°$ which is the rolling direction. However, in regard to the value of the magnetic flux density, from FIG. 10, it is ascertained that compared to B45 max (steel 10-X) of the present invention, the steel 10-X of the present invention has a low value of B50 in all the measurement directions. In comparison between the magnetic flux density of the comparative example and the magnetic flux density of the example of the present invention by the absolute value, in B0 max (steel 10-Y) of the comparative example, the value (absolute value) of the magnetic flux density B50 was the highest such as 1.765 T at $\theta=0°$ which is the rolling direction. Meanwhile, the value of the magnetic flux density B45 max (steel 10-X) of the present invention was 1.841 T. Accordingly, based on FIG. 10, the inventors of this application have checked that the value of the magnetic flux density B50 in the steel 10-X of the present invention indicates a higher value than the steel 10-Y of the comparative example in all the measurement directions.

As described above, it is ascertained that an electrical steel sheet, which has high magnetic flux density in a direction of 45° within a wider range than the comparative example obtained from the technologies in the related art, can be obtained through low-speed hot finish rolling of the present invention.

[Industrial Applicability]

The present invention can be applied as a stator core of a small-sized motor, a stepping motor, an alternator, a generator, a drive motor for an electric automobile or a hybrid car, and the like. In addition, the present invention can also be applied as a non-oriented electrical steel sheet for a core.

[Brief Description of the Reference Symbols]

1 non-oriented electrical steel sheet
2 strip-shaped blank
11 core back portion
12 claw pole
21 coil
31 stator
32 claw pole motor
L rolling direction
C transverse direction
D1 first direction (direction forming 45° with respect to rolling direction)
D2 second direction (direction forming 45° with respect to rolling direction)
D3 third direction (direction forming 45° with respect to rolling direction)
D4 fourth direction (direction forming 45° with respect to rolling direction)

**Claims**

1. A non-oriented electrical steel sheet for a stator core of a claw pole motor, wherein the non-oriented electrical steel sheet is a strip-shaped steel sheet in which magnetic flux density in a direction forming 45° with respect to a rolling direction is higher than magnetic flux density in the rolling direction and magnetic flux density in a transverse direction that is a direction forming 90° with respect to the rolling direction.

2. The non-oriented electrical steel sheet according to claim 1, wherein
when a first direction represents a direction inclined at an angle of 45° counterclockwise around a sheet surface normal line with respect to the rolling direction;
a second direction represents a direction inclined at an angle of 135° counterclockwise around the sheet surface normal line with respect to the rolling direction;
a third direction represents a direction inclined at an angle of 45° clockwise around the sheet surface normal line with respect to the rolling direction;
a fourth direction represents a direction inclined at an angle of 135° clockwise around the sheet surface normal line with respect to the rolling direction;
B50 (45-ave.) represents an average value of magnetic flux density in the first direction, magnetic flux density in the second direction, magnetic flux density in the third direction, and magnetic flux density in the fourth direction with a magnetizing force of 5,000 A/m by a unit T; and
B50 (L+C) represents an average value of the magnetic flux density in the rolling direction and the magnetic flux density in the transverse direction with a magnetizing force of 5,000 A/m by the unit T,
the following Expression (1) is established.

$$B50\ (L+C)+0.020<B50\ (45\text{-ave.}) \dots (1)$$

3. The non-oriented electrical steel sheet according to claim 2, wherein
the magnetic flux density is the highest in the first direction among directions in which an angle with respect to the rolling direction is included within a range from 0° to 90° counterclockwise around the sheet surface normal line;
the magnetic flux density is the highest in the second direction among directions in which an angle with respect to the rolling direction is included within a range from 90° to 180° counterclockwise around the sheet surface normal line;
the magnetic flux density is the highest in the third direction among directions in which an angle with respect to the rolling direction is included within a range from 0° to 90° clockwise around the sheet surface normal line;
the magnetic flux density is the highest in the fourth direction among directions in which an angle with respect to the rolling direction is included within a range from 90° to 180° clockwise around the sheet surface normal line,
when B45 max represents the magnetic flux density in the first direction, a condition that magnetic flux density in a direction in which an angle with respect to the first direction is included within a range of ±10° around the sheet surface normal line is 0.99×B45 max or higher is satisfied, and
the same condition is also satisfied for each of the second direction, the third direction, and the fourth direction.

**4.** A method of manufacturing a non-oriented electrical steel sheet, comprising:

hot rolling a sheet bar obtained by rough rolling a slab under a condition that a hot finish rolling start temperature ranges from 800°C to 1,150°C, a hot finish rolling temperature is lower than 750°C, and a rolling speed of a hot finish rolling mill on a last stand outlet side is 300 m/min or slower; and
cold rolling a hot rolled steel sheet obtained by the hot rolling, at a reduction higher than 87%.

**5.** A method of manufacturing a non-oriented electrical steel sheet, comprising:

hot rolling a sheet bar obtained by rough rolling a slab under a condition that a hot finish rolling start temperature ranges from 800°C to 1,150°C, a hot finish rolling temperature is 800°C or lower, a reduction of hot finish rolling is 94% or higher, and a rolling speed of a hot finish rolling mill on a last stand outlet side is 300 m/min or slower.

**6.** A claw pole motor which uses the non-oriented electrical steel sheet according to any one of claims 1 to 3 as a stator core,
wherein the stator core is formed by using a strip-shaped blank which is punched such that an orientation of a claw pole forms an angle of 45° with respect to a rolling direction of the non-oriented electrical steel sheet.

# FIG. 1

# FIG. 2

FIG. 3

FIG. 4

FIG. 5

## FIG. 6A

## FIG. 6B

## FIG. 6C

## FIG. 7

## FIG. 8

## FIG. 9

# FIG. 10

ANGLE θ (deg.) WITH RESPECT TO ROLLING DIRECTION

**INTERNATIONAL SEARCH REPORT**

International application No.

PCT/JP2016/059159

A.  CLASSIFICATION OF SUBJECT MATTER
*H02K1/02(2006.01)i*

According to International Patent Classification (IPC) or to both national classification and IPC

B.  FIELDS SEARCHED

Minimum documentation searched (classification system followed by classification symbols)
H02K1/02

Documentation searched other than minimum documentation to the extent that such documents are included in the fields searched
Jitsuyo Shinan Koho        1922–1996   Jitsuyo Shinan Toroku Koho   1996–2016
Kokai Jitsuyo Shinan Koho   1971–2016   Toroku Jitsuyo Shinan Koho   1994–2016

Electronic data base consulted during the international search (name of data base and, where practicable, search terms used)

C.  DOCUMENTS CONSIDERED TO BE RELEVANT

| Category* | Citation of document, with indication, where appropriate, of the relevant passages | Relevant to claim No. |
|---|---|---|
| Y | JP 2009-5421 A  (Hitachi, Ltd.),<br>08 January 2009 (08.01.2009),<br>paragraphs [0059] to [0064]; fig. 14 to 15<br>& US 2009/0001843 A1<br>paragraphs [0265] to [0270]; fig. 14 to 15<br>& EP 2012409 A2 | 1-3,6 |
| Y | JP 2000-54084 A  (Nippon Steel Corp.),<br>22 February 2000 (22.02.2000),<br>paragraphs [0026] to [0027]; fig. 1<br>(Family: none) | 1-3,6 |
| X<br>Y | JP 2008-156741 A  (Nippon Steel Corp.),<br>10 July 2008 (10.07.2008),<br>paragraphs [0034] to [0037], [0082] to [0088]<br>(Family: none) | 5<br>4 |

☒  Further documents are listed in the continuation of Box C.　　☐  See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

Date of the actual completion of the international search
10 June 2016 (10.06.16)

Date of mailing of the international search report
21 June 2016 (21.06.16)

Name and mailing address of the ISA/
Japan Patent Office
3-4-3,Kasumigaseki,Chiyoda-ku,
Tokyo 100-8915,Japan

Authorized officer

Telephone No.

Form PCT/ISA/210 (second sheet) (January 2015)

**INTERNATIONAL SEARCH REPORT**

International application No.

PCT/JP2016/059159

C (Continuation).   DOCUMENTS CONSIDERED TO BE RELEVANT

| Category* | Citation of document, with indication, where appropriate, of the relevant passages | Relevant to claim No. |
|---|---|---|
| Y | JP 2009-299102 A  (Sumitomo Metal Industries, Ltd.),<br>24 December 2009 (24.12.2009),<br>paragraph [0063]<br>(Family: none) | 4 |

Form PCT/ISA/210 (continuation of second sheet) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP H11355983 B
- JP 2008072854 A
- JP 2001161054 A
- JP 2003189584 A
- JP 2013201811 A
- JP 2005117744 A
- JP 2011111658 A
- JP 2012067330 A